# EUROPEAN PATENT SPECIFICATION

(11) **EP 4 721 448 B1**
(45) Date of publication and mention of the grant of the patent: **28.10.2026**
(21) Application number: 24729033.1
(22) Date of filing: 21.05.2024
(51) Int. Cl.: H04W 24/02

(54) **SELECTION OF PERFORMANCE VERIFICATION PROCEDURE BASED ON NETWORK OBJECT CLASSIFICATION**
AUSWAHL EINES LEISTUNGSÜBERPRÜFUNGSVERFAHRENS AUF DER BASIS EINER NETZWERKOBJEKTKLASSIFIZIERUNG
SÉLECTION D'UNE PROCÉDURE DE VÉRIFICATION DE PERFORMANCE SUR LA BASE D'UNE CLASSIFICATION D'OBJET DE RÉSEAU

(30) Priority: 29.05.2023 FI 20235595
(43) Date of publication of application: 08.04.2026
(73) Proprietor: Elisa Oyj, 00520 Helsinki (FI)
(72) Inventor: JOKELA, Tommi, 00520 Helsinki (FI)
(74) Representative: Papula Oy
(86) International application number: PCT/FI2024/050245
(87) International publication number: WO 2024/246417

(56) References cited:
- US-A1- 2019 311 041
- US-A1- 2020 029 230
- US-A1- 2023 191 608

## Description

### TECHNICAL FIELD

Various example embodiments generally relate to the field of wireless communications. Some example embodiments relate to verification of site integration operations.

### BACKGROUND

Wireless communication may be implemented with a cellular radio network comprising transmission sites that offer communication services via multiple cells corresponding to certain geographical coverage areas. Configuration of the cellular radio network may be changed from time to time, for example to add new cells to improve coverage or capacity of the network, or modify existing cells to optimize network performance. Such a procedure may be referred to as site integration. Document US 2020/029230 A1 relates to classification of base station sectors into context categories and instructing a subset of base stations to implement coverage and quality optimization parameter adjustment, capacity optimization parameter adjustment, and accessibility optimization parameter adjustment. Document US 2019/311041 A1 discloses a system that may determine a dynamic object-relationship model based on a traversal of a database schema from a root object. The system may determine object attributes for child objects in the object database. In an example, an object attribute may be a relationship between the object and another object, or a property of the object.

### SUMMARY

The invention is defined by the appended claims. Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to understand the example embodiments. In the drawings:
FIG. 1 illustrates an example of a cellular communication network;
FIG. 2 illustrates an example of an apparatus configured to practise one or more example embodiments;
FIG. 3 illustrates an example of a data model of hierarchical network objects;
FIG. 4 illustrates an example of a method for selecting between machine learning (ML) and non-ML based performance verification for a network object;
FIG. 5 illustrates an example of a method for classifying a cell; and
FIG. 6 illustrates an example of a method for performance verification of a network object.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same functions and sequences may be accomplished by different examples.

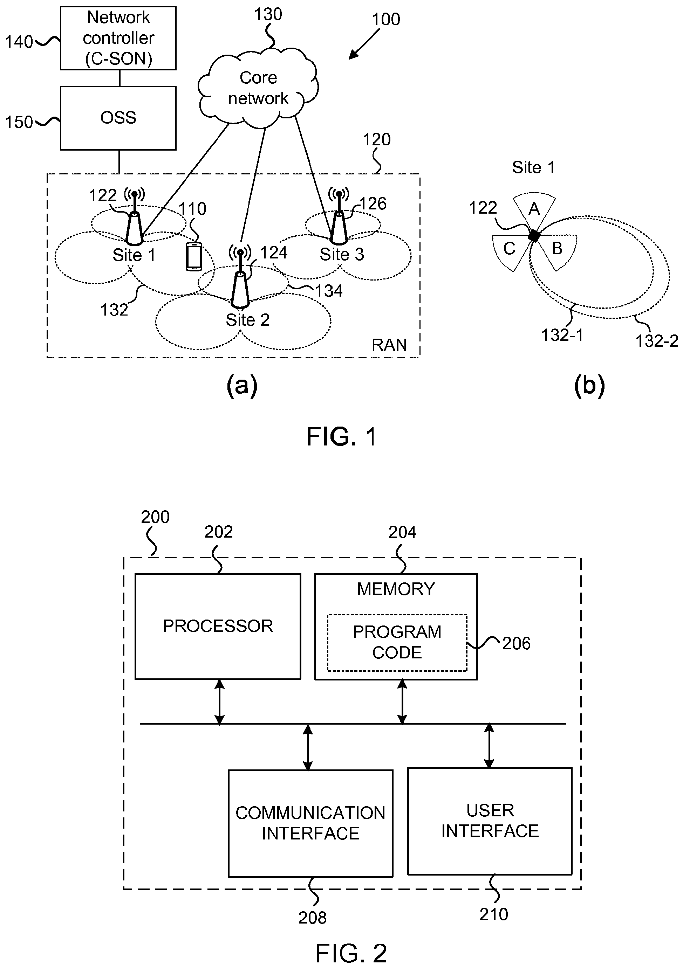

FIG. 1(a) illustrates an example of a cellular communication network. Cellular communication network 100 may comprise one or more devices, which may be also referred to as client nodes, user nodes, or user equipment (UE). An example of a device is UE 110, which may communicate with one or more access nodes of a radio access network (RAN) 120. Cellular communication network 100 may therefore comprise a radio network. RAN 120 may comprise one or more transmission sites, also simply referred to as sites (e.g., Sites 1 to 3). A site may comprise one or more access nodes. A transmission site may be further configured to provide communication services in one or more sectors, as will be further described with reference to FIG. 1(b). One access node may be configured to serve one or more sectors and/or one or more cells, illustrated in FIG. 1(a) with dotted circles, which may correspond to geographical area(s) covered by signals transmitted by the access node for a corresponding cell. Signals transmitted by an access node to UE 110 may be referred to as downlink signals. Signals transmitted by UE 110 to an access node may be referred to as uplink signals. An access node may be also referred to as an access point or a base station.

Cellular communication network 100 may be configured for example in accordance with the 4^{th} or 5^{th} generation (4G, 5G) digital cellular communication networks, as defined by the 3^{rd} Generation Partnership Project (3GPP). For example, cellular communication network 100 may be configured to operate according to 3GPP (4G) LTE (Long-Term Evolution) and/or 3GPP 5G NR (New Radio) specifications. It is however appreciated that example embodiments presented herein are not limited to these example networks and may be applied in any present or future wireless communication networks, or combinations thereof, for example other type of cellular networks such as Global System for Mobile communication (GSM) or universal mobile telecommunication system (UMTS), short-range wireless networks, multicast networks, broadcast networks, or the like. Access nodes 122, 124, 126 of RAN 120 may for example comprise 5^{th} generation access nodes (gNB) or 4^{th} generation access nodes (eNodeB).

FIG. 1(b) illustrates an example of cells of a sector of a transmission site, where Site 1 of FIG. 1(a) is used as an example. Access node 122 may be configured to serve three sectors (A to C). In this example, two cells 132-1 and 132-2 may be configured at Sector B, but in general a sector may comprise one or more cells. The cells may be identified be different cell identifiers (e.g., physical cell ID). Cells associated with the same sector may be configured to operate at different frequencies or with different code bases in case of a code division multiple access (CDMA) system. As illustrated in FIG. 1(b), coverage areas of the cells of the same sector may overlap.

Referring back to FIG. 1(a), cellular communication network 100 may further comprise a core network 130, which may comprise various network functions (NF) for establishing, configuring, and controlling data communication sessions of users, for example UE 110. The data communication sessions may carry data traffic, for example application data associated with one or more applications running on UE 110. Cellular communication network 100 may further comprise a network controller 140, for example a centralized self-organized network (C-SON) controller, which may be responsible of configuring various operations of RAN 120. Network controller 140 may be also referred to as centralized network controller. Network controller 140 may interface an operations support system (OSS) 150, which may be configured to deliver various information, such as for example inventory management (IM) data, configuration management (CM) data, or performance management (PM) data between RAN 120 and network controller 140. Even though illustrated as a separate entity, network controller 140 may be also embodied as part of any suitable network device of function, for example as part of OSS 150. Even though some operations have been described as being performed by network controller 140, it is understood that similar functions may be performed alternatively by other network device(s) or network function(s) of communication network 100, which may be in general referred to as network objects. One task of network controller 140 may be to verify performance of cellular communication network 100, or network object(s) thereof, in association with a site integration procedure, for example in order to determine whether the changes in configuration(s) associated with particular network object(s) of cellular communication network 100 are to be maintained or reversed.

Operational characteristics of cellular communication network 100 may be analysed and optimized with many different ways and based on performance management (PM) data, also referred to as performance data, examples of which include various key performance indicators (KPI), including, but not limited to, the following: traffic channel (TCH) setup success rate (GSM), standalone dedicated control channel (SDCCH) setup success rate, cell availability (GSM, UMTS), TCH drop rate (GSM), SDCCH drop rate (GSM), SDCCH traffic (GSM), TCH traffic (GSM), SDCCH congestion time (GSM), downlink EDGE (Enhanced Data rates for GSM Evolution) traffic (GSM), circuit-switched (CS) success rate (UMTS), packet-switched (PS) success rate (UMTS), radio resource control (RRC) mobile-oriented success rate (UMTS), RRC mobile-terminated (MT) success rate (UMTS), PS call drop rate (UMTS), CS call drop rate (UMTS), high-speed uplink packet access (HSUPA) traffic (HSUPA), CS traffic (HSUPA), high-speed downlink packet access (HSDPA) traffic (UMTS), RRC setup success rate (LTE), evolved-UMTS terrestrial radio access network (E-UTRAN) radio access bearer (E-RAB) setup success rate (LTE), RRC abnormal release rate (LTE), E-RAB drop rate (LTE) , downlink data volume (LTE), uplink data volume (LTE), average reported channel quality indicator (CQI) (LTE), multiple input multiple output (MIMO) rank indicator. Each KPI may be applicable in the systems indicated in parenthesis after the respective KPI, but it is noted that the KPI may be applicable also in other systems.

As noted above, site integration may involve addition of new cell(s) in RAN 120, for example to improve coverage or capacity of RAN 120, or, modification of existing cell(s) (e.g., cell parameter(s) or coverage), for example to optimize the performance of the cell and/or other cell(s). Site integration has a substantial potential for impacting network KPIs due to changes in configuration of cellular communication network 100, for example RAN 120 (e.g., its topology). Hence, it may be desired for a network operator to monitor performance of a site to be integrated, e.g., one or more network object(s) associated with the site, before and after the site integration. This enables to take relevant actions in case of significant performance degradation.

Site integration may be monitored by manually inspecting relevant KPI statistics for some time after site integration has been completed. This approach may be useful in some applications even though it may cause excessive manual workload and be also susceptible to human errors. Monitoring site integration may be automated by fetching relevant KPI and configuration data, for example from OSS database(s), and scheduling automatic checks causing automatic service tickets to be output, when detecting significant degradation in relevant KPI(s). However, certain challenges may arise from this approach. For example, site integration may comprise addition of new cells, sectors, or even a completely new base station. Alternatively, or additionally, hardware, software, or configuration of the existing cell(s), sector(s), access node(s), or other network object(s) may be modified without adding new equipment. Some network objects (e.g., cells) may not be modified during site integration. It may be therefore difficult to handle such a diverse set of scenarios with only one type of KPI check. Instead, it may be beneficial to use different strategies based on the actual scenario.

For example, the identity of a network object (e.g., cell, sector, access node) may change during site integration. This may be problematic for performance verification procedures relying on historical data of the network object, as contiguous KPI history before and after site integration may be required. Examples of such procedures include machine learning (ML) based performance verification procedures.

Example embodiments of the present disclosure provide methods for overcoming such challenges. For example, a performance verification procedure (e.g., a type thereof) may be selected based on determining whether performance data (e.g., KPI data) obtained prior to a change in configuration of cellular communication network 100 (e.g., due to site integration) is applicable for a particular network object. According to some examples, the performance data may be determined to be applicable, even though identity of the network object has changed or the change is considered not to significantly affect the performance data. Furthermore, a hierarchical model of network objects may be applied to determine whether the performance data is applicable for a particular network object.

Examples of suitable machine learning (ML) methods for performance verification include unsupervised machine learning models, which may be in general configured to analyse data and detect hidden structures or patterns within the data. Unsupervised ML models may be exploited to identify samples of KPI data that are inconsistent with the rest of the KPI data, for example for the purpose of anomaly detection in performance verification. ML-based performance verification methods may be configured to output an indication of the performance not being verified, in response to detecting the KPI data to be inconsistent with historical KPI data. Unsupervised ML models may be operated without labelled training data, that is, without telling the ML model which samples of the data set should be regarded as verified performance data. Examples of suitable unsupervised ML methods include clustering techniques, such as KNN (k nearest neighbours), or outlier techniques such as isolation forest. For example, in case of KNN any set of KPI data having a distance higher than a threshold from the closest cluster centre may be regarded anomalous and hence as not verified. A ML based performance verification procedure may comprise at least one function implemented by a ML model, such as for example a neural network.

While ML based performance verification may be highly effective, ML models may require a continuous history of data, for which circumstances in the cellular communication network 100 remain substantially unchanged. For example, after site integration it may not be desired to use an unsupervised ML model for performance verification, because the unsupervised ML model has learned to detect inconsistencies under circumstances before the site integration. Therefore, an unsupervised ML model might not be able to determine that performance after site integration is verified, because it could determine any change in the KPI data to be inconsistent with KPI data prior to the site integration.

As alternative to ML based performance verification, network controller 140 may be configured with non-ML based performance verification procedure(s), for example one or more performance verification algorithms. A non-ML based performance verification procedure may not comprise any functions performed by a ML model. An example of a non-ML based performance verification procedure is a current KPI data threshold based performance verification procedure, which may comprise an algorithm configured to take as input the current KPI data and output an indication of whether performance of cellular communication network 100 (e.g., RAN 120) was verified or not. Verified performance may indicate that the network operates as expected. Not verified performance may indicate that the network does not operate as expected, or at least that it is not possible to verify that the network operates as expected.

The current KPI data threshold based performance verification may comprise comparing the current KPI data to preconfigured threshold(s). For example, network controller 140 may be configured to compare a TCH setup success rate, TCH drop rate, or in general any suitable KPI, to a respective threshold. If a threshold, or a preconfigured number of thresholds for different KPIs, is violated, network controller 140 may determine that performance of the associated network object is not verified. If no threshold, or a preconfigured number of thresholds for different KPIs, is violated, network controller 140 may determine that performance of the network object is verified. Network controller 140 may then output an indication of whether performance of the network object was verified or not. The indication may be output for example on a display or by transmitting the indication to another device, for example as an automated service ticket.

FIG. 2 illustrates an example embodiment of an apparatus 200 configured to perform one or more example embodiments. Apparatus 200 may be for example used to implement network controller 140. Apparatus 200 may comprise at least one processor 202. The at least one processor 202 may comprise, for example, one or more of various processing devices or processor circuitry, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 200 may further comprise at least one memory 204. The at least one memory 204 may be configured to store, for example, computer program code or the like, for example operating system software and application software. The at least one memory 204 may comprise one or more volatile memory devices, one or more non-volatile memory devices, and/or a combination thereof. For example, the at least one memory 204 may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

Apparatus 200 may further comprise a communication interface 208 configured to enable apparatus 200 to transmit and/or receive information to/from other devices, functions, or entities. In one example, apparatus 200 may use communication interface 208 to transmit or receive information over a service based interface (SBI) message bus of core network 130, for example to core network 130 and/or RAN 120. Communication interface 208 may therefore comprise a data communication interface and be configured for communication between devices, for example according to one or more data communication protocols. Apparatus 200 may be for example configured to transmit indication(s) of verified or non-verified performance, for example to an automated service ticket system, or to provide network configuration instructions to RAN 120 to cause reconfiguration of network object(s). Apparatus 200 may further comprise a user interface, for example for providing user output by the apparatus, such as for example visual and/or audible signal(s), for example by speaker(s), display(s), light(s), or the like. User interface 210 may be used for example for outputting indication(s) of verified or non-verified performance to a human user.

When apparatus 200 is configured to implement some functionality, some component and/or components of apparatus 200, such as for example the at least one processor 202 and/or the at least one memory 204, may be configured to implement this functionality. Furthermore, when the at least one processor 202 is configured to implement some functionality, this functionality may be implemented using program code 206 comprised, for example, in the at least one memory 204.

The functionality described herein may be performed, at least in part, by one or more computer program product components such as for example software components. According to an embodiment, the apparatus comprises a processor or processor circuitry, such as for example a microcontroller, configured by the program code when executed to execute the embodiments of the operations and functionality described. A computer program or a computer program product may therefore comprise instructions for causing, when executed, apparatus 200 to perform the method(s) described herein. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

Apparatus 200 comprises means for performing at least one method described herein. In one example, the means comprises the at least one processor 202, the at least one memory 204 including program code 206 configured to, when executed by the at least one processor, cause the apparatus 200 to perform the method.

Apparatus 200 may comprise a computing device such as for example an access point, an access node, a base station, a server, a network device, a network function device, or the like. Although apparatus 200 is illustrated as a single device it is appreciated that, wherever applicable, functions of apparatus 200 may be distributed to a plurality of devices, for example to implement example embodiments as a cloud computing service.

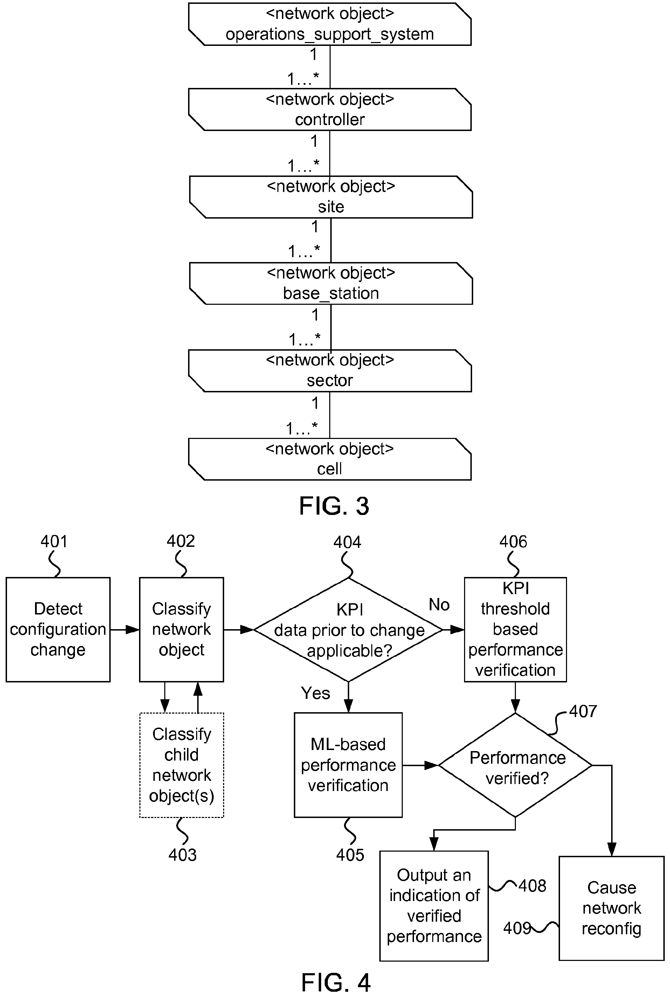

FIG. 3 illustrates an example of a data model of hierarchical network objects. In this example, the hierarchical data model includes the following network objects: *operations support system, controller, site, base_station, sector,* and *cell.* In this example, a network object *controller* may be configured to control one or more subordinate network objects and it may be separate from network controller 140. It is however noted that the hierarchical data model may comprise any suitable combination of one or more of these network objects, optionally with other network objects not illustrated in FIG. 3. A network object may be associated with one or more child network objects, as indicated with cardinality 1... *. A network object having one or more child network objects may be called a parent network object. For example, (parent) network object *base_station* may be associated with one or more *sectors* as its child objects. Network object *base_station* may be however a child network object to a *site.* Similarly, a *sector* may be associated with one or more *cells* as its child objects. It is however noted that the relationships illustrated in FIG. 3 are provided merely as examples and the hierarchical data model may be arranged in any suitable order. For example, the hierarchical data model need not include a *sector.* Instead, a base_station or a site may be directly associated with one or more *cells* as their (1^{st} generation) child objects. An *n*-th generation child object of a network object may refer to a child network object having a child relationship to the network object via *n* - 1 network objects.

FIG. 4 illustrates an example of a method for selecting between ML-based and non-ML based performance verification procedures for a network object. The method may be computer-implemented. Even though described in this example to be performed by network controller 140, the method may be implemented by any network function or network device, for example included in core network 130.

At operation 401, network controller 140 may detect a configuration change in cellular communication network 100 (e.g., RAN 120). As noted above, a change may include addition or removal of cell(s) or other network objects, or a change in their parameter(s), in general a change in how the network is configured to serve users, for example UE 110. Network controller 140 may be configured to initiate a performance verification procedure, in response to detecting the change in the configuration of the network. The change may be associated with one or more network objects. The change in the configuration of the network may be due to a site integration procedure performed within the network.

At operation 402, network controller 140 may classify the network object. The determined classification may be used to determine which type of performance verification procedure, e.g. ML or non-ML based, is to be performed for the network object. The classification may be indicative of whether performance data obtained prior to the detected change is applicable for the network object. As illustrated in FIG. 4 classification of a network object may comprise classifying child network objects (cf. operation 403) of the network object. Determining the classification of the network object may be performed based on classification(s) of child network object(s) of the network object, as will be further described below. This enables classification of higher level network objects and selection of a suitable performance verification procedure at higher level of the hierarchical structure of network objects, instead of individually selecting and performing performance verification for each lower level (child) network object, which provides the benefit of improving efficiency of performance verification.

Network controller 140 may be configured to classify a (child) network object as a new object, in response to determining that no corresponding network objects existed in the cellular communication network before the detected change. Determining that no corresponding network objects existed in the cellular communication network before the detected change may comprise determining that there are no network objects having the same identifier, or having substantially same characteristics, as the network object in question. For example, if an identifier of the network object has changed, but other characteristics parameters of the network object remain unchanged, network controller 140 may determine that the network object is not a new object. Determining whether a network object has substantially same characteristics as another network object may comprise determining whether particular parameters, or a particular number or proportion of parameters of the network object have changed. A network object may be determined to be new if the network object, or a corresponding network object, did not exist a predetermined time (e.g., *X* days) before the change. Classifying a network object as a new object provides the benefit of enabling to select a performance verification procedure that is not dependent on historical performance data.

Network controller 140 may be configured to classify the (child) network object as a rotated object. This may be in response to determining that the network object is not a new object and that a rotation angle of a radiation pattern of the network object during the change exceeds a threshold (e.g., *Y* degrees). This threshold may be referred to as a first threshold and it may be given as an angle. Rotation may be applicable for example the following network objects: cell (rotation of radiation pattern the cell), sector (rotation of radiation pattern of cells of the sector), or site (rotation of radiation pattern(s) of cells and/or sectors of the site). Rotation of the radiation pattern of the cell, sector, or site may be with respect to a vertical axis located at a geographical position of the site. Alternatively, or additionally, rotation of a radiation pattern of a cell or a sector may be with respect to a horizontal axis, for example reflecting changes in antenna tilt of the cell or sector. Classifying a network object as a rotated object provides the benefit of enabling rotated network objects not to be regarded as new objects. More effective performance verification procedures (e.g., ML-based performance verification) may be selected for at least some rotated objects, because historical KPI data may be applicable if the rotation is small enough.

Network controller 140 may be configured to classify the (child) network object as a modified object. This may be in response to determining that the network object is not a new object or a rotated object and that at least one parameter of the network object was modified during the change. Examples of parameters possibly modified (e.g., during site integration) include, bearings (e.g., horizontal and/or vertical angle of radiation pattern), base station identifier, base station name, controller identifier, node identifier, local cell identifier, elevation, frequency channel, frequency band, bandwidth, base station software version, base station hardware version/type, cell name, operations support system identifier, site identifier, technology, or vendor.

Determining that at least one parameter of the network object was modified may comprise determining that any of the parameters of the network object has changed or determining that particular parameter(s), or a particular number or proportion of the parameters of the network have changed. Network controller 140 may be for example configured to classify the network object as a modified object if at least one of the following parameters has changed: bearing, frequency channel, technology (e.g., radio access technology), or vendor (e.g., vendor of equipment responsible for the network object). Network controller 140 may determine to use a non-ML based performance verification procedure, if any of these parameters has changed. Classifying a network object as a modified object provides the benefit of enabling network objects with minor modifications not to be regarded as new objects. More effective performance verification procedures (e.g., ML-based performance verification) may be selected for at least some modified objects, because historical KPI data may be applicable if the modifications of the network objects are not significant.

Network controller 140 may be configured to classify the (child) network object as an old object. This may be in response to determining that the network object is not a new object, a rotated object, or a modified object. It is however possible that some of the example classifications described above are not used. For example, network controller may be configured to classify a network object as a new object or old object, without other options. In this case, network controller 140 may classify the (child) network object as an old object, in response to determining that the network object is not a new object. If network controller 140 is configured to classify a network object as a new object, rotated object, or old object, without other options, network controller 140 may classify the (child) network object as an old object, in response to determining that the network object is not any of the following: new object or a rotated object. In one example, network controller 140 may be configured to classify a network object as a new object, in response to determining that the network object is not any of the following: a new object, a rotated object, or a modified object. Classifying a network object as an old object provides the benefit of enabling selection of more effective performance verification procedures (e.g., ML-based performance verification), because historical KPI data is generally applicable for an old object.

When child network objects (if any) of the network object have been classified, for example as described above, network controller 140 may determine a classification for the (parent) network object. Network controller 140 may be configured classify a network object as an old object, in response to determining that all child objects of the network object are old objects. Network controller 140 may be configured to classify the network object as a new object, in response to determining that all child objects of the network object are new objects. Network controller 140 may be configured to classify the network object as a rotated object, in response to determining that all child objects of the network object are rotated objects. Network controller 140 may be configured to classify the network object as a modified object, in response to determining that child objects of the network object include objects of different classes. In the above examples, the criterion of 'all child objects' may be replaced by a preconfigured number or proportion of the child network objects. As already indicated above, classifying a parent network based on classification(s) of its child network object(s) provides the benefit of enabling an efficient way of classifying the parent network object and selection of a suitable performance verification procedure for the parent network object directly. Performance verification may be therefore efficiently performed at the level of the parent network object, instead of individually selecting and performing performance verification for the child network objects.

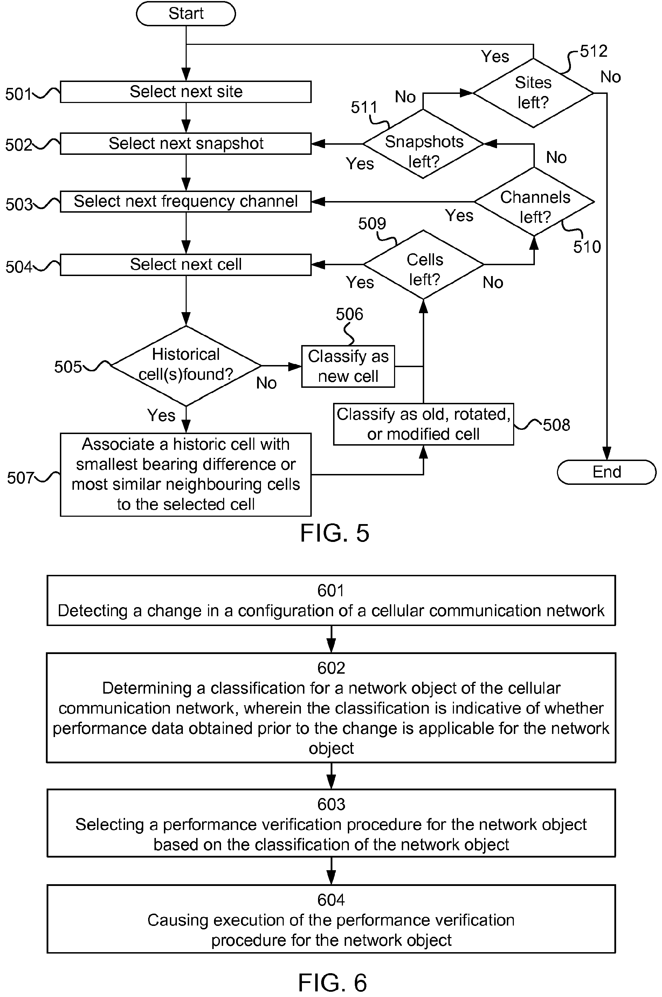

FIG. 5 illustrates an example of method for classifying cells. In this example, the network objects to be classified include cells. A cell may be a parent network object to be classified by itself or a child network object to be classified as part of classification procedure for its parent network object(s), e.g., a sector and/or a site. The procedure may be started by network controller 140, for example in response to detecting a change in configuration of cellular communication network 100. Even though the method of FIG. 5 iterates over sites, cells, historical snapshots, and frequency channels, it is noted that the method may be performed considering only one site, cell, snapshot, and/or frequency channel. The procedure of FIG. 5 enables to find an identifier that can be used to link the KPI data of corresponding logical cell before and after the change in the configuration of cellular communication network 100. Note that in some cases it may not be possible to use the network operator given cell identifier (e.g., cell label or local cell id) used for that purpose, for example as this identifier may change during site integration. In general, the method enables to identify any historical cells (e.g., cells that existed before site integration) corresponding to a currently present cell of the network.

At operation 501, network controller 140 may select next site to be processed.

At operation 502, network controller 140 may select next snapshot of the history of the selected site. A snapshot may comprise KPI data of the site captured at a certain historical time instant or time period. Historical snapshots of the KPI data of the site may be captured and delivered to network controller 140 periodically or at a predetermined schedule, for example daily. Network controller 140 may therefore receive (snapshots of) historical KPI data. Network controller 140 may receive the snapshots from devices responsible for controlling the network objects.

At operation 503, network controller 140 may select a next frequency channel. A frequency channel may be characterized for example by the centre frequency of the cell(s) configured to operate at that frequency channel.

At operation 504, network controller 140 may select a next (current) cell to be processed. A cell may be identified for example by a physical cell identifier (PCID).

At operation 505, network controller 140 may determine whether there are any historical cells that correspond to the selected cell. For example, network controller 140 may be configured to iterate over other cells of the same frequency channel and/or same site and to determine whether parameters (e.g., bearing or list of neighbouring cells) of the other cells correspond to the selected cell. This may be done considering the snapshot selected at operation 502. For example, network controller 140 may compare bearings of the other cells to the bearing of the selected cell. Network controller 140 may determine that a historical cell corresponds to the selected cell, if the bearing difference between the cells is below a threshold. This threshold may be referred to as a third threshold. Accordingly, network controller 140 may determine that a historical cell has been found. In other words, network controller 140 may determine that no corresponding cells existed for the selected cell before the change in cellular communication network 100, in response to determining that prior to the change the site did not include cells having a bearing difference lower than the (third) threshold when compared to bearing of the cell. Alternatively, network controller 140 may determine that a corresponding cell existed for the cell before the change, in response to determining that prior to the change the site included a corresponding cell having a bearing difference lower than the (third) threshold when compared to bearing of the selected cell.

Alternatively, network controller 140 may compare neighbouring cell lists of other cells, e.g., other cells of the same site, with the neighbouring cell list of the selected cell. Network controller 140 may determine that another cell corresponds to the selected cell based on similarity of the cell lists, for example if the cell lists include a threshold amount of same cells (e.g., identified by same cell identifier), for example a threshold number or a threshold proportion of same cells. Accordingly, network controller 140 may determine that a historical cell has been found. In other words, network controller 140 may determine that no corresponding cells existed for the selected cell before the change in cellular communication network 100, in response to determining that prior to the change the site did not include cells associated with a neighbouring cell list comprising a threshold amount of same cells, when compared to the neighbouring cell list of the selected cell. Alternatively, network controller 140 may determine that a corresponding cell existed for the cell before the change, in response to determining that prior to the change the site included a corresponding cell associated with a neighbouring cell list comprising the threshold amount of same cells, when compared to the neighbouring cell list of the selected cell.

If network controller 140 does not find any historical cells for the selected cell, network controller 140 may move to execution of operation 506. If network controller 140 finds at least one historical cell for the selected cell, network controller 140 may move to execution of operation 507.

At operation 506, network controller 140 may classify the selected cell as a new cell. This may be in response to determining (cf. operation 505) that prior to the change in cellular communication network 100, there did not exist any cells corresponding to the selected cell.

At operation 507, network controller 507 may associate a historical cell with smallest bearing difference or most similar neighbouring cells to the selected cell. However, if a historical cell is associated to multiple current cells, network controller 140 may associate the historic cell to the closest current cell in terms of bearing difference. Network controller 140 may be therefore configured to associate one historic cell to one current cell. The associated historical cell may be called a corresponding cell. Network controller 140 may link KPI data of the corresponding cell to the selected cell. This enables network controller 140 to consider KPI data of the corresponding cell in performance verification of the selected cell. Hence, a continuous KPI data set may be formed, including data captured before and after the change in configuration of cellular communication network 100. Network controller 140 may also determine whether parameters of the selected cell have changed, when compared to parameters of the corresponding cell.

At operation 508, network controller 140 may classify the selected cell as an old cell, rotated cell, or modified cell, for example as generally described for network objects above. For example, the bearing difference between the corresponding (historical) cell and the selected cell may be used to determine whether the selected cell is to be classified as a rotated cell. The modifications in parameters of the selected cell with respect to the corresponding cell may be used to determine whether the selected cell is to be classified as a modified cell.

At operations 509, network controller 140 may determine to select a next cell (if available) and continue to process the next cell at operations 505 to 508. If there are no cells left, network controller 140 may determine to select a next frequency channel (if available), next snapshot (if available), or a next site (if available), and process the associated cell(s) at operations 505 to 508. The method may be ended when there are no further sites to be processed, or in general any further cells to be processed.

In one example, the procedure of FIG. 5 may be implemented as follows: 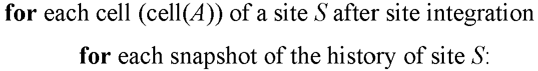 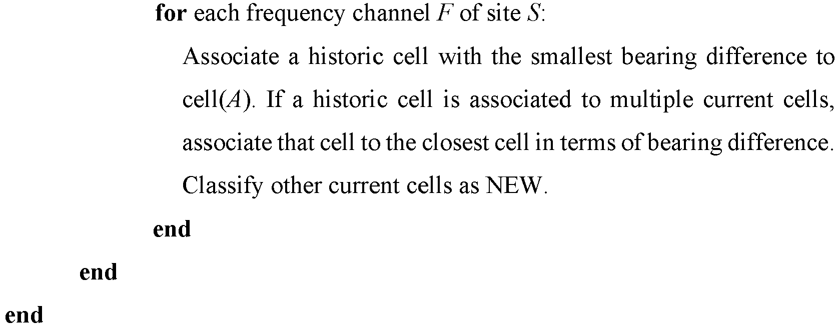 If cell(A) does not have a definite bearing, or otherwise, the neighboring cell information be used as an alternative criterion. In that case the bearing difference may bye replaced by a comparison of the neighbor lists of the current and historic cell, as described above.

Referring back to FIG. 4, at operation 404 network controller 140 may determine whether KPI data obtained prior to the change in configuration of cellular communication network 100 is applicable for the network object. Network controller 140 may determine this based on the classification of the network object. Network controller 140 may then select performance verification of a suitable type (e.g., ML or non-ML based) accordingly.

For example, network controller 140 may select a ML based performance verification procedure for the network object, in response to determining that the network object is classified as an old object. Classification as an old object implies that KPI data prior to the change is applicable for the network object. Network controller 140 may select a ML based performance verification procedure for the network object also when the network object is not classified as an old object, but predetermined condition(s) are met. An example of such a condition is the rotation angle of the radiation pattern of the network object during the change not exceeding a threshold. This threshold may be referred to as a second threshold. If the rotation angle is small enough, network controller 140 may determine that KPI data of the corresponding (historical) cell is applicable and select a ML based performance verification procedure. Another example of such a condition is that modified parameter(s) of the network are not included in a list of parameters for which it is required to select a non-ML based performance verification procedure, for example a current performance data (e.g., KPI) threshold based procedure. Examples of parameters for which a non-ML based performance verification procedure is required include the following: bearing (e.g., if rotation exceeds a threshold), frequency channel, technology (e.g., radio access technology), or vendor (e.g., vendor of equipment responsible for the network object). In general, network controller 140 may select a ML based performance verification procedure for the network object, in response to determining that the classification of the network object is indicative of the performance data obtained prior to the change being applicable for the network object. This provides the benefit of enabling the more efficient ML based performance verification to be used for the network object.

Network controller 140 may select a non-ML based performance verification procedure for the network object, in response to determining that the network object is classified as a new object. Classification as a new object implies that KPI data prior to the change is not applicable for the network object. Network controller 140 may select a non-ML based performance verification procedure for the network object also when the network object is not classified as a new object, but the abovementioned predetermined condition(s) are not met.

For example, network controller 140 may select a non-ML based performance verification procedure for the network object, in response to determining that the network object is classified as a rotated object and the rotation angle of the radiation pattern of the network object during the change exceeds the (second) threshold, or in response to determining that the network object is classified as a modified object and the modified parameter(s) are included in the list of parameters requiring non-ML based performance verification.

Applying the list of parameters provides the benefit of enabling the network operator to configure parameters that require non-ML based performance verification. Network controller 140 may receive such list for example via a user interface of network controller 140, or from another device via a data communication interface. In general, network controller 140 may select a non-ML based performance verification procedure for the network object, in response to determining that the classification of the network object is indicative of the performance data obtained prior to the change not being applicable for the network object. For example, when the network object comprises a sector with a plurality of cells as child objects of the sector, network controller 140 may select a ML-based performance verification procedure for the sector, in response to determining that a number of cells of the sector classified as new objects does not exceed a threshold. This threshold may be referred to as a fourth threshold. This provides the benefit of enabling the more efficient ML-based performance verification for the sector, even though some of its cells were classified as new cells. ML-based performance verification may be validly performed if the number of new cells is small enough compared to the total number of cells of the sector.

Network controller 140 may move from execution of operation 404 to execution of either operation 405 or 406, depending on whether the KPI data obtained prior to the change is applicable, for example as determined based on the classification of the network object.

At operation 405, network controller 140 may cause execution of a ML-based performance verification procedure. Network controller 140 may cause the execution by executing the ML-based performance verification itself (e.g., by a ML model included in network controller 140) or by instructing another device or function to execute the ML-based performance verification. In either case, the ML-based performance verification may be executed based on performance data (e.g., KPI data) obtained both prior to the change in the configuration of cellular communication network 100 and subsequent to the change. The KPI data may be obtained, e.g., captured, by any network device and delivered to network controller 140. The ML based performance verification procedure may comprise executing a ML model, e.g., an unsupervised anomaly detection model, with the KPI data captured both prior to and subsequent to the change. Hence, the ML model may be provided with both current and historical input data, regardless of the change in the configuration of the network. It is therefore possible to exploit the more effective ML-based performance verification, instead of being limited to non-ML based methods that would rely only on KPI data obtained subsequent to the change.

Classification (*new, rotated, modified,* or *old*) of a cell may be implemented as follows:
A cell is *new* if:
   - the cell was first seen *X* days before the start of site integration period.
A cell is *rotated* if:
   - the cell is not *new,* and
   - it is rotated more than *Y* degrees during the site integration.
A cell is *modified* if:
   - the cell is not *new,* and
   - the cell is not *rotated,* and
   - at least one property of the cell has changed during the site integration.
A cell is *old* otherwise.

Classification of a (parent) network object, e.g., a sector or base station may be implemented as follows:
An object (e.g., sector) is *old* if:
   - all child objects (e.g., cells) are *old.*
An object is *new* if:
   - all child objects are *new.*
An object is *rotated* if:
   - all child objects are *rotated.*
An object is *modified* otherwise.

Network controller 140 may assign a particular type of KPI check (e.g., ML or non-ML) to a network object based on {modification type, object type} tuple, where modification type refers to the classification (e.g., new, rotated, modified, or old) and object type refers to type of the network object (e.g., site, sector, cell, or the like). For example, condition(s) for selecting certain type of performance verification procedure for a modified or rotated object may be dependent on the object type. The condition(s) may be different for different object types.

The disclosed classification methods enable assigning a KPI check (performance verification) of correct type for a certain network object. For example, in case of new cell, a threshold based KPI check may be selected, as there is no sufficient history of KPI data for executing a ML based KPI check. A ML based KPI check may be however selected for old cells as there is a solid history of KPI data. In case of a rotated cell, either threshold based or ML based KPI check may be selected, depending for example on the bearing difference prior to and subsequent to the change. For example, the coverage area of the cell may change too much for executing a ML based KPI check. In case of a MODIFIED cell, either threshold based or ML based KPI check may be selected, depending for example on the modified parameter(s), as the change of cell properties may not always impact the KPI data significantly. In case of a new sector, a threshold based KPI data check may be selected as there is no sufficient history of KPI data for executing a ML based check. A ML based KP data check may be however selected for old sectors as there is a solid history of KPI data. In case of a modified sector, ML based KPI data check may be selected even when some cells of the sector were new. This provides the benefit of easy capacity expansion. Consequently, the accuracy of the KPI checks may be improved, yielding for example:
- less false positive tickets and therefore less manual work for inspecting those, and
- less missed detections, resulting in a lower number of cells with QoS problems and less significant customer impact.
Another benefit is that the site integration procedure is simplified as the network operator does not need to maintain identifiers of cells during site integration. For example, cells may be named such that that the sector number increases clockwise. When using such a naming convention, an addition of new sector to a site would unavoidably cause a mismatch in the cell names before and after site integration. Example embodiments of the present disclosure enable efficient performance verification even when using such naming convention.

As an example of a site integration procedure, the capacity of a three-sector LTE site is expanded by adding an LTE2100 layer on top of existing LTE800 and LTE1800 layers. In addition, a new sector with additional LTE1800 layer is added during the site integration. The following KPI data checks may be configured to check whether the downlink user throughput and call setup success rate (CSSR) degraded during the site integration:
Check 1: Downlink user throughput for a new or rotated (e.g., more than 5 degrees) cell
   - threshold based KPI check for throughput, e.g., with throughput > 5 Mbit/s indicating that performance was verified
Check 2: Downlink user throughput for a modified or old cell
   - ML based check, for example using an anomaly detection model
Check 3: CSSR for a new, modified, or old cell
   - threshold based KPI check for CSSR, e.g., with CSSR > 99.8 % indicating that performance was verified

The downlink user throughput of the new LTE2100 cells may be checked by a threshold-based (non-ML) approach, as there is no KPI history for those cells. Furthermore, the downlink user throughput of added LTE1800 cell may be checked by a KPI threshold based (non-ML) approach, as there is no other LTE1800 cell within 5 degree bearing distance. In this example, all the other LTE cells have complete KPI history and can be hence checked by the ML based approach. The CSSR of all cells may be checked by the KPI threshold based approach, as ML is not expected to provide any benefit for that particular KPI.

FIG. 6 illustrates an example of a method for performance verification of a network node.

At 601, the method may comprise detecting a change in a configuration of a cellular communication network.

At 602, the method may comprise determining a classification for a network object of the cellular communication network, wherein the classification is indicative of whether performance data obtained prior to the change is applicable for the network object.

At 603, the method may comprise selecting a performance verification procedure for the network object based on the classification of the network object.

At 604, the method may comprise causing execution of the performance verification procedure for the network object.

Further features of the method directly result for example from the functionalities of network controller 140 or in general apparatus 200, as described throughout the specification and in the appended claims, and are therefore not repeated here. Different variations of the method may be also applied, as described in connection with the various example embodiments.

An apparatus, such as for example a network device configured to implement one or more network functions or entities, may be configured to perform or cause performance of any aspect of the method(s) described herein. Further, a computer program or a computer program product may comprise instructions for causing, when executed, an apparatus to perform any aspect of the method(s) described herein. Further, an apparatus may comprise means for performing any aspect of the method(s) described herein. According to an example embodiment, the means comprises at least one processor, and memory including program code, the at least one processor, and program code configured to, when executed by the at least one processor, cause performance of any aspect of the method(s). In general, computer program instructions may be executed on means providing generic processing functions. Such means may be embedded for example in a computer, a server, or the like. The method(s) may be thus computer-implemented, for example based algorithm(s) executable by the generic processing functions, an example of which is the at least one processor 202.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first' or 'second' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments.

## Claims

1. A computer-implemented method, comprising:
detecting (601) a change in a configuration of a cellular communication network (100);
determining (602) a classification for a network object of the cellular communication network (100), wherein the classification is indicative of whether performance data obtained prior to the change is applicable for the network object;
selecting (603) a performance verification procedure for the network object based on the classification of the network object;
selecting a machine learning based performance verification procedure for the network object, in response to determining that the classification of the network object is indicative of the performance data obtained prior to the change being applicable for the network object, or
selecting a non-machine learning based performance verification procedure for the network object, in response to determining that the classification is indicative of the performance data obtained prior to the change not being applicable for the network object; and
causing (604) execution of the performance verification procedure for the network object.

2. The method according to claim 1, further comprising:
determining the classification of the network obj ect based on a classification of at least one child network object of the network object.

3. The method according to claim 1 or 2, further comprising:
classifying the network object or the at least one child network object as a new object, in response to determining that no corresponding network objects or child network objects existed in the cellular communication network (100) before the change;
classifying the network object or the at least one child network object as a rotated object, in response to determining that the network object or the at least one child network object is not a new object and that a rotation angle of a radiation pattern of the network object or the at least on child object during the change exceeds a first threshold;
classifying the network object or the at least one child network object as a modified object, in response to determining that the network object or the at least one child network object is not a new object or a rotated object and that at least one parameter of the network object was modified during the change; and/or
classifying the network object or the at least one child network object as an old object, in response to determining that the network object or the at least one child network object is not a new object, a rotated object, or a modified object.

4. The method according to claim 3, further comprising:
classifying the network object as an old object, in response to determining that all child objects of the network object are old objects;
classifying the network object as a new object, in response to determining that all child objects of the network object are new objects;
classifying the network object as a rotated object, in response to determining that all child objects of the network object are rotated objects; and/or
classifying the network object as a modified object, in response to determining that child objects of the network object include objects of different classes.

5. The method according to claim 3 or 4, further comprising:
selecting the machine learning based performance verification procedure for the network object, in response to determining that:
the network object is classified as an old object,
the network object is classified as a rotated object and the rotation angle of the radiation pattern of the network object during the change does not exceed a second threshold, or
the network object is classified as a modified object and the at least one parameter is not included in a list of parameters associated with a requirement to select the non-machine learning based performance verification procedure.

6. The method according to any of claims 3 to 5, further comprising:
selecting the non-machine learning based performance verification procedure for the network object, in response to determining that:
the network object is classified as a new object,
the network object is classified as a rotated object and the rotation angle of the radiation pattern of the network object during the change exceeds the second threshold, or
the network object is classified as a modified object and the at least one parameter is included in a list of parameters associated with a requirement to select the non-machine learning based performance verification procedure.

7. The method according to any of claims 3 to 6, wherein the network object or the at least one child network object comprises a cell of a transmission site of the cellular communication network (100).

8. The method according to claim 7, further comprising:
determining that no corresponding cells existed for the cell before the change, in response to determining that:
prior to the change the transmission site did not include cells having a bearing difference lower than a third threshold when compared to bearing of the cell, or
prior to the change the transmission site did not include cells associated with a neighbouring cell list comprising a threshold amount of same cells as a neighbouring cell list of the cell.

9. The method according to claim 7, further comprising:
determining that a corresponding cell existed for the cell before the change, in response to determining that:
prior to the change the transmission site included the corresponding cell having a bearing difference lower than a third threshold when compared to bearing of the cell, or
prior to the change the transmission site included the corresponding cell associated with a neighbouring cell list comprising a threshold amount of same cells as the neighbouring cell list of the cell; and
executing the machine learning based performance verification procedure for the cell based on performance data of the cell obtained subsequent to the change and performance data of the corresponding cell obtained prior to the change.

10. The method according to any of claims 1 to 6, wherein the network object comprises a sector of a transmission site of the cellular communication network (100), and/or wherein the at least one child network object comprises a cell of the sector.

11. The method according to claims 3 and 10, further comprising:
selecting the machine learning based performance verification procedure for the sector, in response to determining that a number of cells of the sector classified as new objects does not exceed a fourth threshold.

12. An apparatus (200) comprising means for performing the method according to any of claims 1 to 11.

13. The apparatus according to claim 12, wherein the means comprises at least one processor (202), at least one memory (204) including program code (206) configured to, when executed by the at least one processor (202), cause the apparatus (200) to perform the method according to any of claims 1 to 11.

14. A computer program comprising program code (206) configured to, when executed by a processor (202), comprised in an apparatus (200), cause the apparatus (200) apparatus (200) at least to perform the method according to any of claims 1 to 11.

## Patentansprüche

1. Computerimplementiertes Verfahren, umfassend:
Erkennen (601) einer Änderung in einer Konfiguration eines zellularen Kommunikationsnetzwerkes (100);
Bestimmen (602) einer Klassifizierung für ein Netzwerkobjekt des zellularen Kommunikationsnetzwerkes (100), wobei die Klassifizierung darauf hinweisend ist, ob vor der Änderung erhaltene Leistungsdaten für das Netzwerkobjekt anwendbar sind;
Auswählen (603) einer Leistungsüberprüfungsprozedur für das Netzwerkobjekt auf der Grundlage der Klassifizierung des Netzwerkobjekts;
Auswählen einer auf maschinellem Lernen basierenden Leistungsüberprüfungsprozedur für das Netzwerkobjekt, als Reaktion auf das Bestimmen, dass die Klassifizierung des Netzwerkobjekts darauf hinweisend ist, dass die vor der Änderung erhaltenen Leistungsdaten für das Netzwerkobjekt anwendbar sind, oder
Auswählen einer nicht auf maschinellem Lernen basierenden Leistungsüberprüfungsprozedur für das Netzwerkobjekt, als Reaktion auf das Bestimmen, dass die Klassifizierung darauf hinweisend ist, dass die vor der Änderung erhaltenen Leistungsdaten für das Netzwerkobjekt nicht anwendbar sind; und
Veranlassen (604) einer Ausführung der Leistungsüberprüfungsprozedur für das Netzwerkobjekt.

2. Verfahren nach Anspruch 1, weiter umfassend:
Bestimmen der Klassifizierung des Netzwerkobjekts auf der Grundlage einer Klassifizierung von mindestens einem untergeordneten Netzwerkobjekt des Netzwerkobjekts.

3. Verfahren nach Anspruch 1 oder 2, weiter umfassend:
Klassifizieren des Netzwerkobjekts oder des mindestens einen untergeordneten Netzwerkobjekts als neues Objekt, als Reaktion auf das Bestimmen, dass vor der Änderung keine entsprechenden Netzwerkobjekte oder untergeordneten Netzwerkobjekte in dem zellularen Kommunikationsnetzwerk (100) existierten;
Klassifizieren des Netzwerkobjekts oder des mindestens einen untergeordneten Netzwerkobjekts als gedrehtes Objekt, als Reaktion auf das Bestimmen, dass das Netzwerkobjekt oder das mindestens eine untergeordnete Netzwerkobjekt kein neues Objekt ist und dass ein Drehwinkel eines Strahlungsmusters des Netzwerkobjekts oder des mindestens einen untergeordneten Objekts während der Änderung einen ersten Schwellenwert überschreitet;
Klassifizieren des Netzwerkobjekts oder des mindestens einen untergeordneten Netzwerkobjekts als modifiziertes Objekt, als Reaktion auf das Bestimmen, dass das Netzwerkobjekt oder das mindestens eine untergeordnete Netzwerkobjekt kein neues Objekt oder ein gedrehtes Objekt ist und dass mindestens ein Parameter des Netzwerkobjekts während der Änderung modifiziert worden ist; und/oder
Klassifizieren des Netzwerkobjekts oder des mindestens einen untergeordneten Netzwerkobjekts als altes Objekt, als Reaktion auf das Bestimmen, dass das Netzwerkobjekt oder das mindestens eine untergeordnete Netzwerkobjekt kein neues Objekt, kein gedrehtes Objekt oder modifiziertes Objekt ist.

4. Verfahren nach Anspruch 3, weiter umfassend:
Klassifizieren des Netzwerkobjekts als altes Objekt, als Reaktion auf das Bestimmen, dass alle untergeordneten Objekte des Netzwerkobjekts alte Objekte sind;
Klassifizieren des Netzwerkobjekts als neues Objekt, als Reaktion auf das Bestimmen, dass alle untergeordneten Objekte des Netzwerkobjekts neue Objekte sind;
Klassifizieren des Netzwerkobjekts als gedrehtes Objekt, als Reaktion auf das Bestimmen, dass alle untergeordneten Objekte des Netzwerkobjekts gedrehte Objekte sind; und/oder
Klassifizieren des Netzwerkobjekts als modifiziertes Objekt, als Reaktion auf das Bestimmen, dass untergeordnete Objekte des Netzwerkobjekts Objekte unterschiedlicher Klassen einschließen.

5. Verfahren nach Anspruch 3 oder 4, weiter umfassend:
Auswählen der auf maschinellem Lernen basierenden Leistungsüberprüfungsprozedur für das Netzwerkobjekt, als Reaktion auf das Bestimmen, dass:
das Netzwerkobjekt als altes Objekt klassifiziert ist,
das Netzwerkobjekt als gedrehtes Objekt klassifiziert ist und der Drehwinkel des Strahlungsmusters des Netzwerkobjekts während der Änderung einen zweiten Schwellenwert nicht überschreitet, oder
das Netzwerkobjekt als modifiziertes Objekt klassifiziert ist und der mindestens eine Parameter nicht in einer Liste von Parametern eingeschlossen ist, der einer Anforderung zum Auswählen der nicht auf maschinellem Lernen basierenden Leistungsüberprüfungsprozedur zugeordnet ist.

6. Verfahren nach einem der Ansprüche 3 bis 5, weiter umfassend:
Auswählen der nicht auf maschinellem Lernen basierenden Leistungsüberprüfungsprozedur für das Netzwerkobjekt, als Reaktion auf das Bestimmen, dass:
das Netzwerkobjekt als neues Objekt klassifiziert ist,
das Netzwerkobjekt als gedrehtes Objekt klassifiziert ist und der Drehwinkel des Strahlungsmusters des Netzwerkobjekts während der Änderung den zweiten Schwellenwert überschreitet, oder
das Netzwerkobjekt als modifiziertes Objekt klassifiziert ist und der mindestens eine Parameter in einer Liste von Parametern eingeschlossen ist, die einer Anforderung zum Auswählen der nicht auf maschinellem Lernen basierenden Leistungsüberprüfungsprozedur zugeordnet ist.

7. Verfahren nach einem der Ansprüche 3 bis 6, wobei das Netzwerkobjekt oder das mindestens eine untergeordnete Netzwerkobjekt eine Zelle einer Sendestelle des zellularen Kommunikationsnetzwerkes (100) umfasst.

8. Verfahren nach Anspruch 7, weiter umfassend:
Bestimmen, dass vor der Änderung keine entsprechenden Zellen für die Zelle existierten, als Reaktion auf das Bestimmen, dass:
die Sendestelle vor der Änderung keine Zellen einschloss, die eine Peilungsdifferenz aufweisen, die niedriger als ein dritter Schwellenwert ist, wenn sie mit der Peilung der Zelle verglichen wird, oder
die Sendestelle vor der Änderung keine Zellen einschloss, die einer benachbarten Zellliste zugeordnet sind, die eine Schwellenmenge gleicher Zellen wie eine benachbarte Zellliste der Zelle umfasst.

9. Verfahren nach Anspruch 7, weiter umfassend:
Bestimmen, dass vor der Änderung eine entsprechende Zelle für die Zelle existierte, als Reaktion auf das Bestimmen, dass:
die Sendestelle vor der Änderung die entsprechende Zelle einschloss, die eine Peilungsdifferenz aufweist, die niedriger als ein dritter Schwellenwert ist, wenn sie mit der Peilung der Zelle verglichen wird, oder
die Sendestelle vor der Änderung eine entsprechende Zelle einschloss, die einer benachbarten Zellliste zugeordnet ist, die eine Schwellenmenge gleicher Zellen wie die benachbarte Zellliste der Zelle umfasst; und
Ausführen der auf maschinellem Lernen basierenden Leistungsüberprüfungsprozedur für die Zelle auf der Grundlage von Leistungsdaten der Zelle, die nach der Änderung erhalten wurden, und Leistungsdaten der entsprechenden Zelle, die vor der Änderung erhalten wurden.

10. Verfahren nach einem der Ansprüche 1 bis 6, wobei das Netzwerkobjekt einen Sektor einer Sendestelle des zellularen Kommunikationsnetzwerkes (100) umfasst, und/oder wobei das mindestens eine untergeordnete Netzwerkobjekt eine Zelle des Sektors umfasst.

11. Verfahren nach den Ansprüchen 3 und 10, weiter umfassend:
Auswählen der auf maschinellem Lernen basierenden Leistungsüberprüfungsprozedur für den Sektor, als Reaktion auf das Bestimmen, dass eine Anzahl an Zellen des Sektors, die als neue Objekte klassifiziert sind, einen vierten Schwellenwert nicht überschreitet.

12. Einrichtung (200), umfassend Mittel zum Durchführen des Verfahrens nach einem der Ansprüche 1 bis 11.

13. Einrichtung nach Anspruch 12, wobei die Mittel mindestens einen Prozessor (202), mindestens einen Speicher (204) umfassen, der Programmcode (206) einschließt, der konfiguriert ist, um bei Ausführung durch den mindestens einen Prozessor (202) die Einrichtung (200) zu veranlassen, das Verfahren nach einem der Ansprüche 1 bis 11 durchzuführen.

14. Computerprogramm, umfassend Programmcode (206), der konfiguriert ist, um bei Ausführung durch einen Prozessor (202), der in einer Einrichtung (200) umfasst ist, die Einrichtung (200) zu veranlassen, mindestens das Verfahren nach einem der Ansprüche 1 bis 11 durchzuführen.

## Revendications

1. Procédé mis en œuvre par ordinateur, comprenant :
la détection (601) d'un changement dans une configuration d'un réseau (100) de communication cellulaire ;
la détermination (602) d'une classification pour un objet de réseau du réseau (100) de communication cellulaire, dans lequel la classification est indicative du fait de savoir si des données de performance obtenues avant le changement sont applicables pour l'objet de réseau ;
la sélection (603) d'une procédure de vérification de performance pour l'objet de réseau sur la base de la classification de l'objet de réseau ;
la sélection d'une procédure de vérification de performance basée sur l'apprentissage automatique pour l'objet de réseau, en réponse à la détermination selon laquelle la classification de l'objet de réseau est indicative du fait que les données de performance obtenues avant le changement sont applicables pour l'objet de réseau, ou
la sélection d'une procédure de vérification de performance non basée sur l'apprentissage automatique pour l'objet de réseau, en réponse à la détermination selon laquelle la classification est indicative du fait que les données de performance obtenues avant le changement ne sont pas applicables pour l'objet de réseau ; et
le fait d'amener (604) l'exécution de la procédure de vérification de performance pour l'objet de réseau.

2. Procédé selon la revendication 1, comprenant en outre :
la détermination de la classification de l'objet de réseau sur la base d'une classification d'au moins un objet de réseau enfant de l'objet de réseau.

3. Procédé selon la revendication 1 ou la revendication 2, comprenant en outre :
la classification de l'objet de réseau ou du au moins un objet de réseau enfant en tant qu'un nouvel objet, en réponse à la détermination qu'aucun objet de réseau correspondant ou objet de réseau enfant correspondant n'existait dans le réseau (100) de communication cellulaire avant le changement ;
la classification de l'objet de réseau ou du au moins un objet de réseau enfant en tant qu'un objet tourné, en réponse à la détermination selon laquelle l'objet de réseau ou le au moins un objet de réseau enfant n'est pas un nouvel objet et qu'un angle de rotation d'un diagramme de rayonnement de l'objet de réseau ou du au moins un objet enfant pendant le changement dépasse un premier seuil ;
la classification de l'objet de réseau ou du au moins un objet de réseau enfant en tant qu'un objet modifié, en réponse à la détermination selon laquelle l'objet de réseau ou le au moins un objet de réseau enfant n'est pas un nouvel objet ou un objet tourné et qu'au moins un paramètre de l'objet de réseau a été modifié pendant le changement ; et/ou
la classification de l'objet de réseau ou du au moins un objet de réseau enfant en tant qu'un objet ancien, en réponse à la détermination selon laquelle l'objet de réseau ou le au moins un objet de réseau enfant n'est pas un nouvel objet, un objet tourné, ou un objet modifié.

4. Procédé selon la revendication 3, comprenant en outre :
la classification de l'objet de réseau en tant qu'un objet ancien, en réponse à la détermination selon laquelle tous les objets enfants de l'objet de réseau sont des objets anciens ;
la classification de l'objet de réseau en tant qu'un nouvel objet, en réponse à la détermination selon laquelle tous les objets enfants de l'objet de réseau sont de nouveaux objets ;
la classification de l'objet de réseau en tant qu'un objet tourné, en réponse à la détermination selon laquelle tous les objets enfants de l'objet de réseau sont des objets tournés ; et/ou
la classification de l'objet de réseau en tant qu'un objet modifié, en réponse à la détermination selon laquelle les objets enfants de l'objet de réseau incluent des objets de classes différentes.

5. Procédé selon la revendication 3 ou la revendication 4, comprenant en outre :
la sélection de la procédure de vérification de performance basée sur l'apprentissage automatique pour l'objet de réseau, en réponse à la détermination selon laquelle :
l'objet de réseau est classifié en tant qu'un objet ancien,
l'objet de réseau est classifié en tant qu'un objet tourné et l'angle de rotation du diagramme de rayonnement de l'objet de réseau pendant le changement ne dépasse pas un deuxième seuil, ou
l'objet de réseau est classifié en tant qu'un objet modifié et le au moins un paramètre n'est pas inclus dans une liste de paramètres associée à une exigence de sélection de la procédure de vérification de performance non basée sur l'apprentissage automatique.

6. Procédé selon l'une quelconque des revendications 3 à 5, comprenant en outre :
la sélection de la procédure de vérification de performance non basée sur l'apprentissage automatique pour l'objet de réseau, en réponse à la détermination selon laquelle :
l'objet de réseau est classifié en tant qu'un nouvel objet,
l'objet de réseau est classifié en tant qu'un objet tourné et l'angle de rotation du diagramme de rayonnement de l'objet de réseau pendant le changement dépasse le deuxième seuil, ou
l'objet de réseau est classifié en tant qu'un objet modifié et le au moins un paramètre est inclus dans une liste de paramètres associée à une exigence de sélection de la procédure de vérification de performance non basée sur l'apprentissage automatique.

7. Procédé selon l'une quelconque des revendications 3 à 6, dans lequel l'objet de réseau ou le au moins un objet de réseau enfant comprend une cellule d'un site de transmission du réseau (100) de communication cellulaire.

8. Procédé selon la revendication 7, comprenant en outre :
la détermination selon laquelle aucune cellule correspondante n'existait pour la cellule avant le changement, en réponse à la détermination selon laquelle :
avant le changement, le site de transmission n'incluait pas de cellules présentant une différence de relèvement inférieure à un troisième seuil lorsque comparé au relèvement de la cellule, ou
avant le changement, le site de transmission n'incluait pas de cellules associées à une liste de cellules voisines comprenant une quantité seuil de mêmes cellules que celles d'une liste de cellules voisines de la cellule.

9. Procédé selon la revendication 7, comprenant en outre :
la détermination selon laquelle une cellule correspondante existait pour la cellule avant le changement, en réponse à la détermination selon laquelle :
avant le changement, le site de transmission incluait la cellule correspondante présentant une différence de relèvement inférieure à un troisième seuil lorsque comparé au relèvement de la cellule, ou
avant le changement, le site de transmission incluait la cellule correspondante associée à une liste de cellules voisines comprenant une quantité seuil de mêmes cellules que celles de la liste de cellules voisines de la cellule ; et
l'exécution de la procédure de vérification de performance basée sur l'apprentissage automatique pour la cellule sur la base de données de performance de la cellule obtenues ultérieurement au changement et de données de performance de la cellule correspondante obtenues avant le changement.

10. Procédé selon l'une quelconque des revendications 1 à 6, dans lequel l'objet de réseau comprend un secteur d'un site de transmission du réseau (100) de communication cellulaire, et/ou dans lequel le au moins un objet de réseau enfant comprend une cellule du secteur.

11. Procédé selon les revendications 3 à 10, comprenant en outre :
la sélection de la procédure de vérification de performance basée sur l'apprentissage automatique pour le secteur, en réponse à la détermination qu'un nombre de cellules du secteur classifiées en tant que nouveaux objets ne dépasse pas un quatrième seuil.

12. Appareil (200) comprenant un moyen de réalisation du procédé selon l'une quelconque des revendications 1 à 11.

13. Appareil selon la revendication 12, dans lequel le moyen comprend au moins un processeur (202), au moins une mémoire (204) incluant un code (206) de programme configuré pour, lorsqu'exécuté par le au moins un processeur (202), amener l'appareil (200) à réaliser le procédé selon l'une quelconque des revendications 1 à 11.

14. Programme informatique comprenant un code (206) de programme configuré pour, lorsqu'exécuté par un processeur (202), compris dans un appareil (200), amener l'appareil (200) au moins à réaliser le procédé selon l'une quelconque des revendications 1 à 11.
